# EUROPÄISCHE PATENTSCHRIFT

(11) **EP 1 013 509 B1**
(45) Veröffentlichungstag und Bekanntmachung des Hinweises auf die Patenterteilung: **03.09.2003**
(21) Anmeldenummer: 99123003.8
(22) Anmeldetag: 19.11.1999
(51) Int. Cl.: B60R 16/02

(54) **Verfahren und Vorrichtung zur Klassifizierung der Fahrweise eines Fahrers in einem Kraftfahrzeug**
Procedure and device for classifying the driving manner of a vehicle driver
Procédé et dispositif pour classer le style de conduite d'un conducteur d'une voiture

(30) Priorität: 24.12.1998 DE 19860248
(43) Veröffentlichungstag der Anmeldung: 28.06.2000
(73) Patentinhaber: DaimlerChrysler AG, 70567 Stuttgart (DE)
(72) Erfinder: Kurz, Gerhard, 73240 Wendlingen (DE); Müller, Armin, 75391 Gechingen (DE); Röhrig-Gericke, Thomas, 71254 Ditzingen (DE); Schöb, Reinhold, 71126 Gäufelden (DE); Tröster, Harry, Dr., 71732 Tamm (DE); Yap, Andy, 73733 Esslingen (DE)

(56) Entgegenhaltungen:
- EP-A- 0 638 742
- DE-A- 4 401 416
- US-A- 4 829 434

## Beschreibung

Die Erfindung betrifft ein Verfahren und eine Vorrichtung zur Klassifizierung der Fahrweise eines Fahrers in einem Kraftfahrzeug nach dem Oberbegriff des Anspruches 1 bzw. 17.

Aus der DE 44 01 416 C2 ist ein gattungsgemäßes Verfahren zur graduellen Fahrweisenklassifikation zwischen ruhiger und dynamischer Fahrweise bekannt, bei dem während der Fahrt fahrweisenindikative Meßgrößen ermittelt und mit Hilfe eines Kennfelds aus den Meßgrößen Fahrweisen-Kennziffern berechnet werden. Diese Fahrweisen-Kennziffern dienen als Maßstab dafür, ob der Fahrer eine ruhigere oder eine dynamischere Fahrweise wünscht; in Abhängigkeit der Fahrweisen-Kennziffern werden das Fahrzeugverhalten beeinflussende Parameter zur Einstellung der Funktion bestimmter Bauteile des Fahrzeugs, beispielsweise des Anti-Blockier-Systems, errechnet und in einer Regel- und Steuereinheit abgelegt.

Um eine zuverlässige Klassifizierung und Adaption der Regelund Steuereinheit auf die jeweilige Fahrweise zu erhalten, wird die Fahrweise separat im Hinblick auf das Beschleunigungsverhalten, das Bremsverhalten und das Lenkverhalten klassifiziert. Durch dieses Vorgehen wird berücksichtigt, daß die Fahrweise mit mehreren Kennziffern präziser und treffender als mit lediglich einer Kennziffer charakterisiert werden kann, wodurch die Gefahr von Fehlentscheidungen des Systems reduziert ist.

Darüberhinaus sind Fahrer-Identifikationseinrichtungen bekannt, so zum Beispiel aus der DE 42 15 406 A1, mit der ein Fahrer seiner Fahrweise entsprechend stufenlos von ökonomisch bis sportlich/leistungsorientiert klassifiziert und das Fahrzeug der Klassifikation entsprechend eingestellt werden kann.

Der Erfindung liegt das Problem zugrunde, das Fahrverhalten eines Kraftfahrzeugs mit Hilfe einer Fahrerklassifizierung zu verbessern.

Dieses Problem wird erfindungsgemäß mit den Merkmalen des Anspruches 1 bzw. 17 gelöst.

Nach dem neuartigen Verfahren werden zunächst Fahrweisen-Kennziffern für eine Mehrzahl unterschiedlicher Fahrer-Reaktionsstufen ermittelt. Diese nach Reaktionsstufen eingruppierten Fahrweisen-Kennziffern werden auf eine Regel- und Steuereinheit des Fahrzeugs übertragen und dort abgelegt.

Nach jedem Start des Kraftfahrzeugs werden Indikatoren ermittelt, die eine Identifikation bzw. Klassifikation des aktuellen Fahrers durch Messung klassifizierender Parameter, Betriebsoder Zustandsgrößen automatisch ermöglichen. Nachdem der aktuelle Fahrer mit Hilfe dieser gemessenen Indikatoren identifiziert bzw. klassifiziert worden ist, werden die diesem Fahrer entsprechenden, in der Regel- und Steuereinheit abgespeicherten Fahrweisen-Kennziffern aktiviert.

Diese Vorgehensweise hat zum einen den Vorteil, daß bei jedem Fahrtantritt ein den jeweiligen Fahrer am besten beschreibender Satz an Fahrweisen-Kennziffern aktiviert wird und das Fahrzeug bei jedem Start personenbezogen eingestellt werden kann. Durch die Aktivierung des entsprechenden Satzes von Fahrweisen-Kennziffern können Reaktionsdefizite, beispielsweise zu langsames Reagieren oder zu zaghaftes Bremsen, durch die Regel- und Steuereinheit kompensiert werden, was die Fahrsicherheit erhöht. Lange Lernphasen, in denen üblicherweise das Fahrzeug ein neutrales Grundverhalten hat, solange die Regel- und Steuereinheit noch nicht an den jeweiligen Fahrer adaptiert ist, entfallen bzw. werden auf ein Minimum verkürzt.

Gemäß einer vorteilhaften Weiterbildung wird eine Grobklassifizierung in drei Reaktionsstufen vorgenommen, die einem durchschnittlichen Fahrer, einem Fahrer mit langsamen Reaktionen und einem reaktionsschnellen Fahrer entsprechen. Ausgehend von dieser Grobklassifizierung werden zweckmäßig während des laufenden Fahrbetriebs im Fahrzeug kontinuierlich Anpassungen der Fahrweisen-Kennziffern vorgenommen, um besonderen Situationen wie Nachtfahrten, Fahrten bei Regen oder Schnee oder unterschiedlichen Tagesformen eines Fahrers, beispielsweise hervorgerufen durch Übermüdung, Rechnung zu tragen. Mit Hilfe dieser Feinklassifizierung werden die Kennziffern und folglich auch das Fahrzeugverhalten situativ im Fahrzeug angepaßt.

Die Klassifizierung eines Fahrers erfolgt aufgrund typischer Fahrerreaktionen. Es kann der Verlauf bzw. die Änderung von Zustandsgrößen ermittelt werden, so zum Beispiel der Druckaufbau in der Hydraulik des Bremssystems oder des Lenksystems oder aber Beschleunigungen/Verzögerungen des Fahrzeugs. Diese Zustandsgrößen dienen als Indikator für die Klassifizierung des Fahrers in einen entsprechenden Reaktionstyp. Diese Vorgehensweise hat den Vorteil, daß keine weiteren Kenngrößen zur Identifizierung des Fahrers benötigt werden. Bei einer Grobklassifizierung in drei Reaktionsstufen erfolgt die Eingruppierung des Fahrers in diejenige Reaktionsstufe, welche sein Reaktionsvermögen am besten widerspiegelt.

Es kann gegebenenfalls aber auch zweckmäßig sein, personenbezogene Kennziffern für einen oder eine Mehrzahl von Fahrers individuell in der Regel- und Steuereinheit des Fahrzeugs abzuspeichern und diese personenspezifischen Kennziffern nach Fahrtantritt durch Identifizierung des aktuellen Fahrers zu aktivieren, wodurch ein von mehreren Personen genutztes Fahrzeug unmittelbar nach dem Start auf den jeweiligen Fahrer optimal eingestellt werden kann. Die Ermittlung personenspezifischer Kennziffern kann anhand ausgewählter Testfahrten im Fahrzeug oder mittels Fahrsimulatoren erfolgen. Als typspezifische Indikatoren, die zur Identifizierung des aktuellen Fahrers herangezogen werden können, dienen beispielsweise die vom Fahrer eingestellte Sitzposition oder das auf den Fahrersitz wirkende Fahrergewicht.

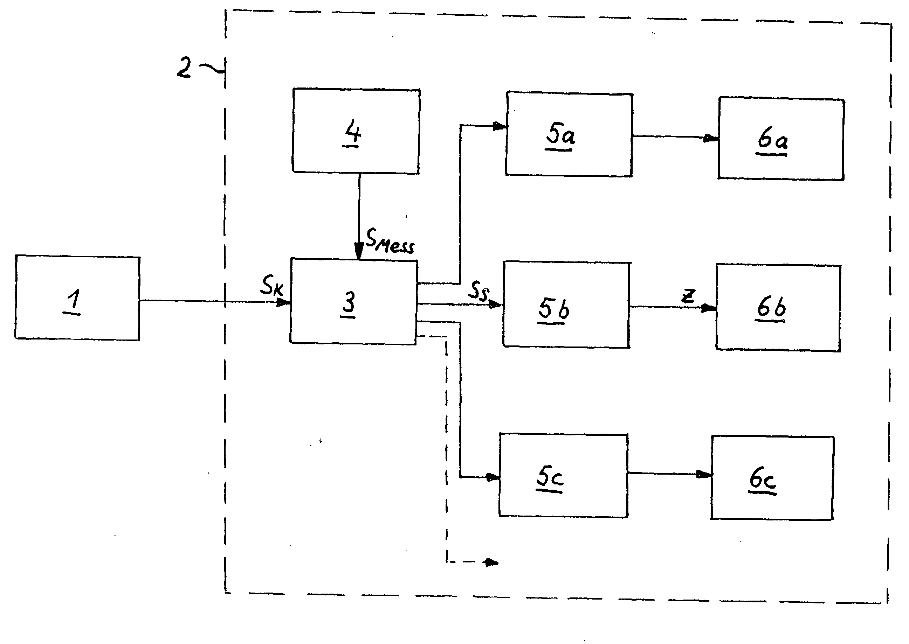

Weitere Vorteile und zweckmäßige Ausführungsformen sind den weiteren Ansprüchen, der Figurenbeschreibung und der Zeichnung zu entnehmen, in der ein Blockdiagramm mit den grundlegenden Verfahrensschritten dargestellt ist.

In der Figur ist mit Bezugszeichen 1 eine Einrichtung bezeichnet, in welcher anhand unterschiedlicher Fahrmanöver Reaktionszeiten eines Fahrers gemessen werden, aus denen Rohwerte für Fahrweisen-Kennziffern abgeleitet werden, welche unterschiedliche Fahrer-Reaktionsstufen für unterschiedliche Fahrertypen kennzeichnen. Die Fahrweisen-Kennziffern sind ein Maßstab für die Reaktionsschnelligkeit des Fahrers; anhand der Fahrweisen-Kennziffern können Parameter diverser Fahrzeug-Bauteile wie beispielsweise eines Anti-Blockier-Systems fahrerspezifisch eingestellt werden, wodurch die unterschiedlichen Reaktionen verschiedener Fahrer in den technischen Aggregaten berücksichtigt und überhastete oder zu langsame Reaktionen zumindest teilweise kompensiert werden können.

Es werden mittels geeigneter Fahrmanöver Fahrweisen-Kennziffern für die Längs- und Querdynamik des Fahrzeugs, insbesondere für die Beschleunigung, für das Bremsverhalten und das Lenkverhalten, ermittelt und anhand dieser Kennziffern diejenigen Fahrzeugkomponenten eingestellt, die die Beschleunigung, die Verzögerung und die Lenkung des Fahrzeugs beeinflussen. Darüberhinaus können aber auch weitere Aggregate des Fahrzeugs, beispielsweise das Federungssystem, berücksichtigt werden.

Als Einrichtung 1 kann eine vollständig rechnerisch darstellbare, optisch und akustisch wahrnehmbare Simulation in einem gegebenenfalls beschränkt bewegbaren Fahrsimulator eingesetzt werden. Darüberhinaus ist es aber auch möglich, ein reales Fahrzeug auf einem Prüfstand zu verwenden und die Reaktionszeiten des Fahrers auf unterschiedliche Fahrsituationen zu messen, die optisch und/oder akustisch erzeugt werden. Auch der Einsatz eines Versuchsfahrzeugs und die Messung von Reaktionen unter realen Bedingungen kommt in Betracht.

In der Einrichtung 1 werden bei vorgegebener Geschwindigkeit diverse Fahrmanöver absolviert, insbesondere das Überqueren von Kreuzungen, Überholmanöver, Vollbremsung, Kolonnenfahren, Berücksichtigung von querenden Fußgängern etc. Darüberhinaus können insbesondere in Fahrsimulatoren auch Fahrsituationen in Grenzbereichen simuliert werden, beispielsweise Fahrten bei eingeschränkter Sicht und/oder schlechter Witterung (Nachtfahrt, Regen, Nebel, Schneefall, Glatteis), Fahrten auf unterschiedlichen Fahrbahnqualitäten, Vorwärts-/Rückwärtsfahren mit Sichtbehinderung durch Hindernisse usw. Die Auswertung einer Vielzahl einzelner Fahrmanöver hat den Vorteil, daß Mittelwerte für die einzelnen Fahrweisen-Kennziffern gebildet werden können und Extremwerte, hervorgerufen durch ungewöhnlich schnelle oder langsame Reaktionen, nur mittelbar in die Kennzifferberechnung einfließen.

Zweckmäßig wird in der Einrichtung 1 eine Grobklassifizierung in eine der drei Fahrer-Reaktionsstufen langsam/durchschnittlich/schnell vorgenommen. Die Datendiskretisierung über die Grobklassifizierung hat den Vorteil, daß nur ein reduzierter Datensatz auf das Fahrzeug übertragen werden muß, in welchem die der jeweiligen Klassifikations- bzw. Reaktionsstufe entsprechenden Kennziffern vorab abgespeichert werden.

Es kann andererseits aber auch zweckmäßig sein, auf eine Grobklassifizierung zu verzichten und anstelle der Grobklassifizierung die exakt ermittelten, nur eine bestimmte Person beschreibende Kennziffern auf das Fahrzeug zu übertragen. In diesem Fall muß ein zusätzlicher, die betreffende Person kennzeichnender Identifikationswert übertragen werden.

Nach Abschluß der Ermittlung der personenbezogenen Fahrweisen-Kennziffern werden entsprechende Kennziffer-Signale S_{K} auf eine Regel- und Steuereinheit 3 des Fahrzeugs 2 übertragen, wobei gegebenenfalls zusätzlich zum Wert der Kennziffern bzw. der Klassifikationseinteilung auch die Information über den zugehörigen Fahrer in der Regel- und Steuereinheit 3 abgespeichert wird.

In einem darauffolgenden Schritt wird vorteilhaft nach dem Aktivieren der Regel- und Steuereinheit 3, beispielsweise ausgelöst durch Betätigung des Zündschlosses, durch Öffnen der Fahrzeugtür oder durch anderweitige Sensierung eines Fahrerwechsels bzw. eines Fahrzeug-Neustarts, eine Fahreridentifizierung bzw. eine Fahrerklassifizierung durchgeführt. Über die allgemein mit Bezugszeichen 4 bezeichnete Fahrzeugsensorik werden personenbezogene Fahrerparameter bzw. -indikatoren ermittelt und als Meßsignale S_{Mess} der Regel- und Steuereinheit 3 zugeführt, in der ein Vergleich mit abgespeicherten Fahrerparametern erfolgt und nach erfolgreicher Fahreridentifizierung bzw. Fahrerklassifizierung die dem momentanen Fahrer entsprechenden Fahrweisen-Kennziffern aktiviert werden. Als klassifizierende Indikatoren können Geschwindigkeitsänderungen des Fahrzeugs, Änderungen im Druckaufbau der Hydraulik des Brems- oder Lenksystems und weitere Parameter und Zustandsgrößen herangezogen werden. Für den Fall, daß ein bestimmter Fahrer identifiziert werden soll, können die vom Fahrer eingestellte Sitzposition, das auf den Fahrersitz wirkende Gewicht des Fahrers oder sonstige zur Fahreridentifizierung taugliche Merkmale gemessen und mit Referenzwerten verglichen werden.

Um zu verhindern, daß bei einer fehlschlagenden Fahreridentifizierung bzw. Fahrerklassifizierung falsche oder gar keine Rohwerte für die Kennziffern vorliegen, werden als Voreinstellung Fahrweisen-Kennziffern für durchschnittliche Fahrer abgespeichert, die automatisch zu Beginn einer Fahrt aktiviert werden.

In der Regel- und Steuereinheit 3 wird zweckmäßig im laufenden Fahrbetrieb eine permanent ablaufende Feinabstimmung der Fahrweisen-Kennziffern durchgeführt, um die Rohwerte der Grobklassifikation zu verbessern und aktuellen Situationen Rechnung zu tragen. Hierfür werden bestimmte Fahreraktivitäten bzw. die Reaktion verschiedener Fahrzeugkomponenten auf Fahreraktivitäten registriert und ausgewertet, beispielsweise die Häufigkeit und Intensität der Betätigung der Fahrzeugbremse, die Häufigkeit des Einsetzens elektronisch geregelter Fahrzeugkomponenten wie Anti-Blockier-System oder Antriebs-Schlupf-Regelung oder ähnliches oder der Gradient im Druckaufbau in der Hydraulikversorgung des Lenksystems oder des Bremssystems. Die Registrierung der Fahreraktivitäten erfolgt entweder durch Messung von Betriebs- und Zustandsgrößen über die Fahrzeugsensorik 4 und Übermittlung an die Regel- und Steuereinheit 3 oder unmittelbar in der Regel- und Steuereinheit 3 durch Zählen der die jeweiligen Fahrzeugkomponenten betätigenden Stellsignale bzw. Impulse.

Die Feinabstimmung kann anhand von sich von der Grobklassifizierung unterscheidender Fahrmanöver erfolgen.

Ausgehend von den aktuellen Fahrweisen-Kennziffern werden in der Regel- und Steuereinheit 3 Stellsignale Sₛ erzeugt, die Stellglieder 5 zugeführt werden, welche Fahrzeugkomponenten 6 beaufschlagen. Die Stellglieder 5 generieren Stellgrößen z, die die Fahrzeugkomponenten auf den gewünschten Wert einstellen. Im Ausführungsbeispiel sind drei Stellglieder 5a, b, c mit zugehörigen Fahrzeugkomponenten 6a, b, c vorgesehen, wobei als einzustellende Fahrzeugkomponente beispielsweise die Drosselklappe, die Kraftstoffeinspritzung, die Bremse oder die Lenkung in Frage kommt.

In weiterer Ausgestaltung der Erfindung können zusätzliche, den Fahrer und/oder die Umgebung des Fahrers überwachende Sensoren vorgesehen sein, um in Gefahrensituationen durch einen Eingriff in das Verhalten des Fahrzeugs die Fahrsicherheit zu erhöhen.

Hierzu kann es vorteilhaft sein, abstandsmessende Systeme zur Sensierung des Abstands zwischen dem Fahrzeug und anderen Fahrzeugen oder feststehenden Hindernissen zu messen bzw. aus der Abstandsänderungen die Relativgeschwindigkeit zu ermitteln. Diese Informationen können zur Ermittlung der Reaktionsfähigkeit, der Belastbarkeit des Fahrers oder allgemein zur Einschätzung der Fahrbereitschaft des Fahrers und folglich zur Beeinflussung der Fahrweisen-Kennziffern herangezogen werden.

Falls der Fahrer einen gegebenen Mindestabstand unterschreitet oder die Relativgeschwindigkeit zu anderen Fahrzeugen bei einem geringen Abstand zu hoch ist, so können die Fahrweisen-Kennziffern angepaßt werden, um das Fahrzeugverhalten dem verlangsamten Reaktionsvermögen des Fahrers entsprechend anzupassen. Darüberhinaus ist aber auch ein unmittelbarer Eingriff in ein Fahrzeug-Bauteil, beispielsweise die Fahrzeugbremse, möglich.

Als weitere Kenngrößen zur Klassifizierung des Fahrerzustands können - bei einem Einsatz visueller Erkennungssysteme - der Beginn eines Lenkeinschlags bezogen auf einen bestimmten Radius und eine bestimmte Fahrzeuggeschwindigkeit herangezogen werden.

Bei Verwendung eines Alkoholsensors kann die Alkoholisierung des Fahrers abgeschätzt werden und bei Überschreiten eines Grenzwerts fahrbehindernde Maßnahmen eingeleitet werden, indem entweder Beschränkungen hinsichtlich der Fahrgeschwindigkeit auferlegt werden oder ein Start bzw. das Losfahren des Fahrzeugs verhindert wird. Der Alkoholsensor wird zweckmäßig im Bereich des Lenkrades installiert.

## Patentansprüche

1. Verfahren zur Klassifizierung der Fahrweise eines Fahrers in einem Kraftfahrzeug, bei dem fahrweisenindikative Meßgrößen aufgenommen und durch einen Vergleich mit Referenzwerten Fahrweisen-Kennziffern ermittelt werden, wobei den Fahrweisen-Kennziffern entsprechende Parametereinstellungen zur Adaption der Funktion einer Regel- und Steuereinheit (3) durchgeführt werden,
**dadurch gekennzeichnet,**
- **daß** in der Regel- und Steuereinheit (3) des Kraftfahrzeugs (2) Voreinstellungen für die Fahrweisen-Kennziffern abgespeichert werden, wobei Fahrweisen-Kennziffern für eine Mehrzahl unterschiedlicher Fahrer-Reaktionsstufen vorgegeben sind, und wobei
die Fahrweisen-kennziffern ein Maßstab für die Reaktionsschnelligkeit des Fahrers sind,
- **daß** im Kraftfahrzeug (2) durch Messung klassifizierender Indikatoren der aktuelle Fahrer in eine vorgegebene Fahrer-Reaktionsstufe eingestuft wird und der Fahrer-Reaktionsstufe entsprechende Fahrweisen-Kennziffern in der Regel- und Steuereinheit (3) aktiviert werden.

2. Verfahren nach Anspruch 1,
**dadurch gekennzeichnet,**
**daß** als klassifizierender Indikator fahrertypspezifische Meßgrößen ermittelt werden.

3. Verfahren nach Anspruch 1
**dadurch gekennzeichnet,**
**daß** als klassifizierender Indikator die Änderung einer oder mehrerer fahrzeugbeschreibender Zustandsgrößen während der Fahrt des Kraftfahrzeugs ermittelt wird.

4. Verfahren nach Anspruch 3,
**dadurch gekennzeichnet,**
**daß** die Änderung im Druckaufbau in der Hydraulik des Bremssystems berücksichtigt wird.

5. Verfahren nach Anspruch 3,
**dadurch gekennzeichnet,**
**daß** die Änderung im Druckaufbau in der Hydraulik des Lenksystems berücksichtigt wird.

6. Verfahren nach Ansprüch 3,
**dadurch gekennzeichnet,**
**daß** Geschwindigkeitsänderungen berücksichtigt werden.

7. Verfahren nach Ansprüch 3,
**dadurch gekennzeichnet,**
**daß** ein mittlerer Abstand gemessen und geschwindigkeitsabhängig berücksichtigt wird.

8. Verfahren nach Ansprüch 3,
**dadurch gekennzeichnet,**
**daß** der Seitenabstand zu seitlichen Hindernissen berücksichtigt wird.

9. Verfahren nach Ansprüch 2,
**dadurch gekennzeichnet,**
**daß** die Häufigkeit von Überholmanövern berücksichtigt wird.

10. Verfahren nach Ansprüch 2,
**dadurch gekennzeichnet,**
**daß** die Zeit vom Erkennen eines Hindernisses durch einen Sensor bis zur Reaktion des Fahrers berücksichtigt wird.

11. Verfahren nach Ansprüch 1,
**dadurch gekennzeichnet,**
**daß** als klassifizierender Indikator im Fahrzeug fahrerspezifische Merkmale zur Identifizierung des aktuellen Fahrers ermittelt werden, wobei nach der Identifizierung im Fahrzeug abgespeicherte, fahrerspezifische Reaktionsstufen aktiviert werden.

12. Verfahren nach Anspruch 11,
**dadurch gekennzeichnet,**
**daß** als klassifizierender Indikator die vom Fahrer eingestellte Sitzposition ermittelt wird.

13. Verfahren nach Anspruch 11,
**dadurch gekennzeichnet,**
**daß** als klassifizierender Indikator das auf den Fahrersitz wirkende Fahrergewicht ermittelt wird.

14. Verfahren nach Ansprüch 1,
**dadurch gekennzeichnet,**
**daß** als Voreinstellung eine Grobklassifizierung in eine Mehrzahl, insbesondere drei, Fahrer-Reaktionsstufen vorgenommen wird.

15. Verfahren nach Ansprüch 1,
**dadurch gekennzeichnet,**
**daß** bei Fahrtantritt als Grundwert in der Regel- und Steuereinheit (3) eine einem Durchschnittsfahrer entsprechende, mittlere Fahrer-Reaktionsstufe vorgegeben wird.

16. Verfahren nach Ansprüch 1,
**dadurch gekennzeichnet,**
**daß** während der Fahrt im Kraftfahrzeug (2) eine fortwährend durchgeführte Anpassung der Fahrweisen-Kennziffern auf die momentane, aktuelle Fahrweise des Fahrers erfolgt.

17. Vorrichtung zur Klassifizierung der Fahrweise eines Fahrers in einem Kraftfahrzeug mit einer Fahrzeugsensorik (4) zur Messung von fahrweisenindikativen Meßsignalen, die mit Referenzwerten entsprechenden Signalen zur Erzeugung von Fahrweisen-Kennziffern verglichen werden, welche in einer Regel- und Steuereinheit (3) gespeichert sind, wobei den Fahrweisen-Kennziffern Signale zugeordnet sind, die Parametereinstellungen zur Adaption der Funktion der Regel- und Steuereinheit (3) entsprechend der Fahrweisen-kennziffern entsprechen,
**dadurch gekennzeichnet,**
- **daß** in der Regel- und Steuereinheit vorab ermittelte Fahrweisen-Kennziffern abgespeichert werden, wobei Fahrweisen-Kennziffern für eine Mehrzahl unterschiedlicher Fahrer-Reaktionsstufen vorgegeben sind,
und wobei die Fahrweisenkenziffern ein Maßstab für die Reaktions schnelligkeit des Fahrers sind,
- **daß** im Kraftfahrzeug (2) Meßsignale (S_{Mess}) zur Fahrertypklassifizierung und Einstufung in eine entsprechende Fahrer-Reaktionsstufe generiert werden, und der Fahren-Reaktionsstufe entsprechende Fahrweisen-Kennziffern in der Regel- und Stenereinheit (3) aktiviert werden.

## Claims

1. A process for classifying the driving style of a driver in a motor vehicle in which measured variables indicative of driving style are recorded and driving style characteristic values are determined by means a comparison with reference values, parameter adjustments corresponding to the driving style characteristic values being made to adapt the operation of an automatic control unit (3),
**characterised in that**
- pre-settings for the driving style characteristic values are stored in the automatic control unit (3) of the motor vehicle (2), driving style characteristic values being pre-set for a plurality of different driver reaction levels and the driving style characteristic values being a measure of the reaction speed of the driver,
- the current driver is allocated to a pre-set driver reaction level by measuring classifying indicators in the vehicle (2) and driving style characteristic values corresponding to the driver reaction level are activated in the automatic control unit (3).

2. A process in accordance with claim 1,
**characterised in that**
driver-type-specific measured variables are determined as classifying indicators.

3. A process in accordance with claim 1,
**characterised in that**
the change in one or more state variables descriptive of the vehicle during vehicle operation is determined as a classifying indicator.

4. A process in accordance with claim 3,
**characterised in that**
the change in the pressure build-up in the hydraulics of the braking system is taken into account.

5. A process in accordance with claim 3,
**characterised in that**
the change in the pressure build-up in the hydraulics of the steering system is taken into account.

6. A process in accordance with claim 3,
**characterised in that**
changes in speed are taken into account.

7. A process in accordance with claim 3,
**characterised in that**
a mean distance is measured and taken into account dependent upon speed.

8. A process in accordance with claim 3,
**characterised in that**
the lateral distance to lateral obstacles is taken into account.

9. A process in accordance with claim 2,
**characterised in that**
the frequency of overtaking manoeuvres is taken into account.

10. A process in accordance with claim 2,
**characterised in that**
the time between the recognition of an obstacle by a sensor and the driver's reaction is taken into account.

11. A process in accordance with claim 1,
**characterised in that**
driver-specific features identifying the current driver are determined as classifying indicators in the vehicle, driver-specific reaction levels stored in the vehicle being activated after identification.

12. A process in accordance with claim 11,
**characterised in that**
the seat position set by the driver is determined as a classifying indicator.

13. A process in accordance with claim 11,
**characterised in that**
the driver weight acting on the driver seat is determined as a classifying indicator.

14. A process in accordance with claim 1,
**characterised in that**
a rough classification at several, in particular three, driver reaction levels, is carried out as a pre-setting.

15. A process in accordance with claim 1,
**characterised in that**
when the vehicle starts to move a mean driver reaction level corresponding to an average driver is pre-set as a basic value in the automatic control unit (3).

16. A process in accordance with claim 1,
**characterised in that**
during operation the driving style characteristic values are continuously adjusted to the momentary current driving style of the driver in the motor vehicle (2).

17. A device for classifying the driving style of a driver in a motor vehicle with a vehicle sensor system (4) to measure measurement signals indicative of driving style which are compared with signals corresponding to reference values in order to produce driving style characteristic values which are stored in an automatic control unit (3), there being signals associated with the driving style characteristic values which correspond to parameter settings to adapt the operation of the automatic control unit (3) in accordance with the driving style characteristic values,
**characterised in that**
- previously determined driving style characteristic values are stored in the automatic control unit, driving style characteristic values being pre-set for several different driver reaction levels and the driving style characteristic values being a measure of the reaction speed of the driver,
- measuring signals (S_{Mess}) for driver type classification and allocation to a corresponding driver reaction level are generated in the motor vehicle (2) and driving style characteristic values corresponding to the driver reaction level are activated in the automatic control unit (3).

## Revendications

1. Procédé pour classer le style de conduite d'un conducteur sur un véhicule, avec lequel des grandeurs de mesure indicatives du style de conduite sont enregistrées et des indices de style de conduite sont déterminés par une comparaison avec des valeurs de référence, des réglages de paramètres correspondant aux indices de styles de conduite étant effectués pour adapter le fonctionnement d'une unité de réglage et de commande (3),
**caractérisé**
- **en ce que** des préréglages pour les indices de styles de conduite sont mémorisés dans l'unité de réglage et de commande (3) de l'automobile, des indices de style de conduite étant prédéfinis pour un grand nombre de différents niveaux de réaction du conducteur et les indices du style de conduite étant un critère pour la rapidité de réaction du conducteur,
- **en ce que** le conducteur actuel est classé dans un niveau prédéfini de réaction du conducteur sur le véhicule (2) par la mesure d'indicateurs de classification et des indices de style de conduite correspondant au niveau de réaction du conducteur sont activés dans l'unité de réglage et de commande (3).

2. Procédé selon la revendication 1,
**caractérisé en ce que**
des grandeurs de mesure spécifiques au type de conducteur sont déterminées comme indicateur de classement.

3. Procédé selon la revendication 1
**caractérisé en ce que**
la variation d'une ou de plusieurs grandeurs d'état décrivant le véhicule est déterminée pendant le parcours de l'automobile en tant qu'indicateur de classement.

4. Procédé selon la revendication 3,
**caractérisé en ce que**
la variation dans la montée en pression dans l'installation hydraulique du système de freinage est prise en compte.

5. Procédé selon la revendication 3,
**caractérisé en ce que**
la variation dans la montée en pression dans l'installation hydraulique du système de direction est prise en compte.

6. Procédé selon la revendication 3,
**caractérisé en ce que**
les variations de vitesse sont prises en compte.

7. Procédé selon la revendication 3,
**caractérisé en ce que**
un espacement moyen est mesuré et pris en compte en fonction de la vitesse.

8. Procédé selon la revendication 3,
**caractérisé en ce que**
l'espacement latéral par rapport aux obstacles latéraux est pris en compte.

9. Procédé selon la revendication 2,
**caractérisé en ce que**
la fréquence des manoeuvres de dépassement est prise en compte.

10. Procédé selon la revendication 2,
**caractérisé en ce que**
le laps de temps s'écoulant entre la détection d'un obstacle par un capteur et la réaction du conducteur est pris en compte.

11. Procédé selon la revendication 1,
**caractérisé en ce que**
des caractéristiques spécifiques au conducteur pour l'identification du conducteur actuel sont déterminées en tant qu'indicateur de classement sur le véhicule, des niveaux de réaction mémorisés sur le véhicule et spécifiques au conducteur étant activés après l'identification.

12. Procédé selon la revendication 11,
**caractérisé en ce que**
la position assise réglée par le conducteur est déterminée en tant qu'indicateur de classement.

13. Procédé selon la revendication 11,
**caractérisé en ce que**
le poids du conducteur agissant sur le siège du conducteur est déterminé en tant qu'indicateur de classement.

14. Procédé selon la revendication 1,
**caractérisé en ce que**
un classement approximatif en plusieurs, en particulier trois, niveaux de réaction du conducteur est effectué comme préréglage.

15. Procédé selon la revendication 1,
**caractérisé en ce que**
un niveau de réaction du conducteur moyen et correspondant à un conducteur moyen est prédéfini au début du parcours en tant que valeur de base dans l'unité de réglage et de commande (3).

16. Procédé selon la revendication 1,
**caractérisé en ce que**
une adaptation effectuée en permanence des indices de style de conduite au style de conduite momentané et actuel du conducteur est effectuée pendant le parcours sur le véhicule (2).

17. Dispositif pour classer le style de conduite d'un conducteur sur un véhicule avec un capteur du véhicule (4) pour mesurer des signaux de mesure indicatifs du style de conduite, qui sont comparés avec des signaux correspondant à des valeurs de référence pour générer des indices de style de conduite, lesquels sont mémorisés dans une unité de réglage et de commande (3), des signaux étant attribués à des indices de style de conduite, signaux qui correspondent à des réglages de paramètres pour l'adaptation du fonctionnement de l'unité de réglage et de commande (3) en fonction des indices du style de conduite,
**caractérisé en ce que**
des indices de style de conduite déterminés auparavant sont mémorisés dans l'unité de réglage et de commande, des indices de style de conduite étant prédéfinis pour un grand nombre de différents niveaux de réaction du conducteur et les indices de style de conduite étant un critère pour la vitesse de réaction du conducteur,
- et **en ce que** des signaux de mesure (Sₘₑₛₛ) sont générés sur le véhicule (2) pour le classement du type de conducteur et l'intégration dans un niveau de réaction du conducteur correspondant, et **en ce que** des indices de style de conduite correspondant au niveau de réaction du conducteur sont activés dans l'unité de réglage et de commande (3).
